Europäisches Patentamt

European Patent Office

Office européen des brevets

(19)

(11) Veröffentlichungsnummer: **0 025 070**
**B1**

(12)                          EUROPÄISCHE PATENTSCHRIFT

(45) Veröffentlichungstag der Patentschrift: **18.01.84**

(51) Int. Cl.³: **F 16 L 23/02**

(21) Anmeldenummer: **79103337.6**

(22) Anmeldetag: **07.09.79**

(54) Flansch.

(43) Veröffentlichungstag der Anmeldung:
**18.03.81 Patentblatt 81/11**

(45) Bekanntmachung des Hinweises auf die Patenterteilung:
**18.01.84 Patentblatt 84/3**

(84) Benannte Vertragsstaaten:
**BE CH DE FR NL**

(56) Entgegenhaltungen:
**DE - A - 2 059 486**
**DE - A - 2 119 547**
**DE - A - 2 236 562**
**DE - C - 858 915**
**DE - U - 1 960 147**
**DE - U - 7 623 278**
**FR - A - 674 447**
**US - A - 3 556 568**

(73) Patentinhaber: **Wilhelm Schulz Apparate- und
Rohrleitungsbau Edelstahl-Press- und Stanzwerk
GmbH
Kuhleshütte 85
D-4150 Krefeld (DE)**

(72) Erfinder: **Kirchkamp, Josef
Roonstrasse 9
D-4150 Krefeld (DE)**

(74) Vertreter: **Cohausz, Werner, Dipl.-Ing. et al,
Schumannstrasse 97
D-4000 Düsseldorf1 (DE)**

Courier Press, Leamington Spa, England.

Flansch

Die Erfindung betrifft einen Flansch als Verbindungselement für Rohrleitungen, Armaturen oder Behälter, der einen Flanschring mit Löchern für den Durchtritt von Befestigungsschrauben umfaßt und ein mit seiner Grundfläche die Dichtfläche bildendes, im Querschnitt U-förmiges Ringformteil, dessen Innenrand eine längere Axialerstreckung hat als sein eine möglichst nahe an dem Teilkreis der Schraubenlöcher in dem Flanschring gelegene Auflage und Unterstützung für den Flanschring bildender Außenrand.

Rohrleitungs-, Armaturen- und Behälterflansche sind in einer Vielzahl von Ausführungsformen bekannt. In der Regel bestehen sie aus einem ebenen (DE - A - 124 715) oder profilierten Flanschring (DE - A - 20 59 484), der entweder direkt an das Ende einer Rohrleitung oder eines Rohrleitungsstutzens angeschweißt oder auf den Endabschnitt der Rohrleitung oder des Rohrleitungsstutzens als Aufsteckschweißflansch aufgeschweißt wird (DE - A - 21 19 547, Fig. 1) oder gegen das umgebördelte Ende des Rohrs oder Rohrstutzens oder ein an das Rohrende angeschweißtes Bördel angesetzt wird (DE - A - 21 19 547, Fig. 2).

Bei der aus der FR - A - 674 447 bekannten gattungsbildenden Flanschverbindung ist das Ende der zu verbindenden Rohrleitungsabschnitte nach außen unter bildung eines U-förmigen Ringformteils umgebogen. Die dabei gebildete ringförmige Rille ist zur Versteifung mit Material ausgefüllt. Gegen die zur Dichtfläche rückwärtige Fläche des Ringformteils ist ein Flanschring lose angelegt. Der Flanschring liegt dabei mit seinem ganzen Innenabschnitt, d.h. mit dem sich vom Außenrand des Ringformteils bis zum Außenumfang der Rohrleitung am Ringformteil an. Seine Abstützung beginnt nahe am Teilkreis der Befestigungsschrauben. Trotzdem ist die Abstützung des Flanschrings am Ringformteil beim Anziehen der Befestigungsschrauben nicht gut gelöst. Beim Anziehen der Befestigungsschraube wird ein Biegemoment auf das Ringformteil ausgeübt. Ohne die Versteifung würde es zu einer unerwünschten Verformung des Ringformteils und dadurch zu einer ungleichmäßigen Pressung der Dichtung kommen, die außen stärker als innen ist. Die Dichtung verformt sich im Querschnitt gesehen zu einem Keil, außen spitz innen breiter, wie in der FR - A - 674 447, Fig. 2 und 3 auch angedeutet.

Der Erfindung liegt die Aufgabe zugrunde, einen Flansch derart auszubilden, daß er bei einfacher Herstellung mit möglichst geringem Materialeinsatz eine höchstmögliche Stabilität erreicht.

Zur Lösung dieser Aufgabe wird gemäß der Erfindung ein Flansch der eingangs genannten Gattung vorgeschlagen, der dadurch gekennzeichnet ist, daß durch ein am Innenrand des Ringformteils angeordnetes Widerlager für den Flanschring in Form einer Schweißnaht oder eines Anschlags eine unlösbare Verbindung zwischen dem Flanschring und dem Ringformteil gebildet ist.

Das Widerlager dient der Abstützung des Innenrandes des Flanschrings beim Anziehen der Befestigungsschrauben und verhindert eine Axialbewegung des Flanschrings.

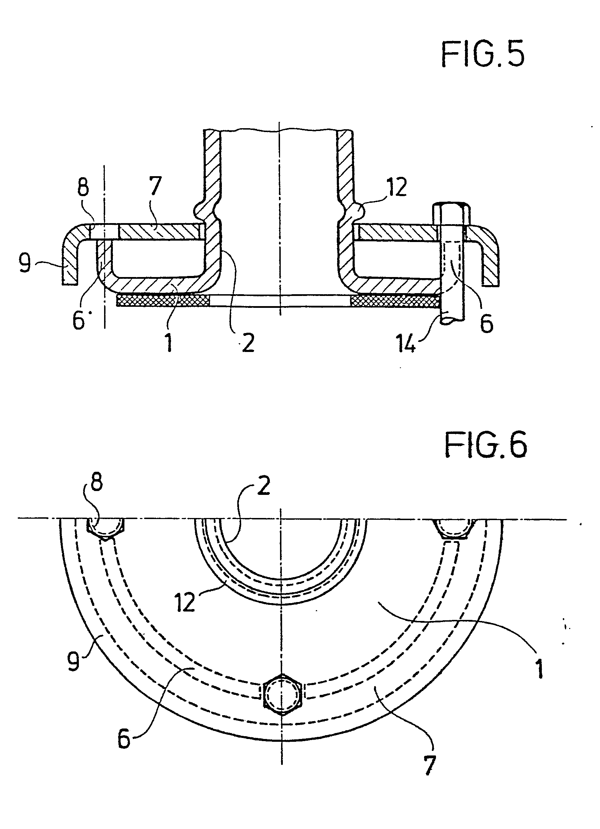

Die den erfindungsgemäßen Flansch bildenden Teile haben eine einfache Form und können daher vorzugsweise als Preßteile einfach und mit geringen Fertigungskosten erzeugt werden. Aufgrund der stabilen Konstruktion des Flansches kann bei gleicher Stabilität dünneres Blech wie für vergleichbare Flansche verwendet werden, was neben Materialkosteneinsparung noch den Vorteil hat, daß weniger Verfrmungsenergie aufgewandt werden muß und leichtere preiswerte Fertigungsanlagen verwendet werden können. Infolge der leichteren Ausführung lassen sich die Flansche einfacher handhaben. Das Ringformteil kann entweder einstückig als Preßformteil gefertigt sein, es ist aber auch möglich, obwohl nicht bevorzugt, an den Außenrand des radialen Rings eines Bördels ein Rohrstück anzuschweißen (Fig. 5).

Aufgrund der erfindungsgemäß vorgesehenen Abstützung des Flanschrings an Abschnitten, die sehr nahe an den Angriffspunkten der Befestigungsschrauben liegen, wird der Hebelarm zwischen Schraubenangriffspunkt und Auflagepunkt des Flansches verkürzt und damit das beim Anziehen des Befestigungsschrauben in den Flansch eingeleitete Biegemoment verringert. Das wirkt sich bei gleicher Stabilität in einer Verringerung des Materialeinsatzes, d.h. geringere Wandstärke für die Flanschteile, aus. Bei einer bevorzugten Ausführung des erfindungsgemäßen Flansches ist der Durchmesser des Außenrandes des Ringformteils gleich dem Teilkreisdurchmesser der Schraubenlöcher in dem Flanschring, und der Außenrand ist im Bereich des Durchtritts der Befestigungsschrauben mit Ausnehmungen versehen.

Bei hohen Anforderungen an die Korrosionsbeständigkeit braucht nur das im Querschnitt U-förmige Ringformteil aus teurerem hochwertigem korrosionsbeständigem Material zu bestehen, der Flanschring kann aus preiswerterem, nicht korrosionsbeständigem Material gefertigt sein.

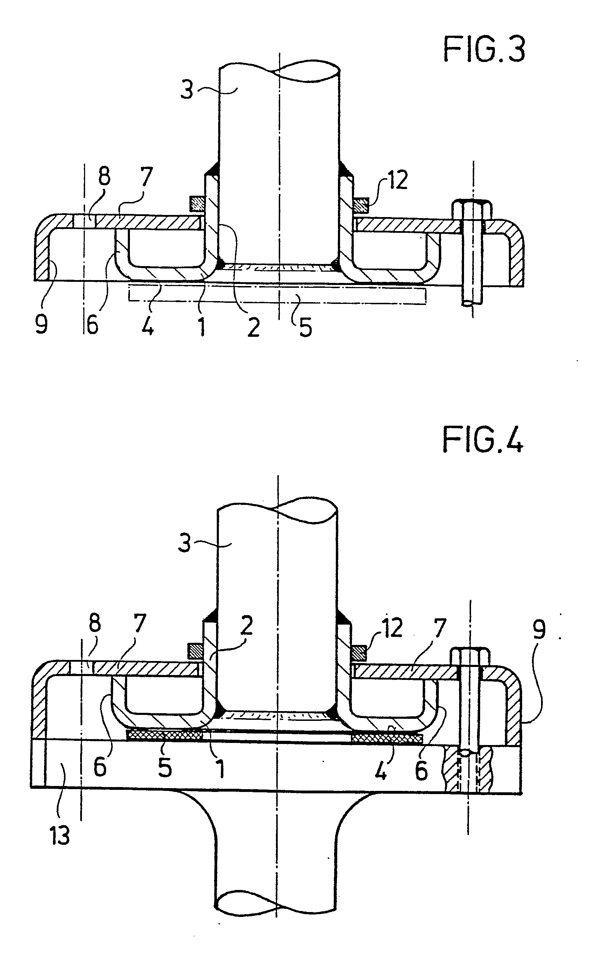

Für die Ausbildung des Widerlagers sind erfindungsgemäß verschiedene Lösungsmöglichkeiten vorgesehen. Die eine besteht darin, daß der in Richtung auf die Dichtfläche umgebördelte Außenrand des Flanschrings eine solche axiale Länge hat, daß er sich bei voll angezogenen Befestigungsschrauben auf dem Gegenflansch abstützt (Fig. 4).

2

Eine andere Ausbildung für das Widerlager besteht darin, daß der Flanschring mit dem Innenrand des Ringformteils verschweißt wird.

Gemäß einer weiteren bevorzugten Ausgestaltung des erfindungsgemäßen Flanschs hat der Innenrand des im Querschnitt U-förmigen Ringformteils eine längere Axialerstreckung als sein Außenrand. So ergibt sich die Möglichkeit einer besseren Verschweißung des Ringformteils mit dem Rohr und außerdem die weitere Möglichkeit für die Ausbildung eines Widerlagers in Form eines Anschlags, um eine axiale Bewegung des losen Flanschrings zu verhindern. Hierbei werden die Vorteile eines Festflanschs (sichere und dauerhafte Verbindung zwischen Flansch und Rohr oder Rohrstutzen) mit den Vorteilen einer Losflanschverbindung (Ausrichtung des Flanschrings in Umfangsrichtung, um die Schraubenlöcher in fluchtende Ausrichtung zu bringen, ohne das gesamte Rohr drehen zu müssen) vereint.

Die Anschläge am Innenrand des Ringformteils können durch Herausprägen aus dem Ringformteil, ferner durch Schweißpunkte oder -lagen oder schließlich durch aufgeschweißte Distanzstücke erzeugt werden.

Der Flanschring kann aus einer ebenen Platte bestehen. Bevorzugt wird es jedoch zur Erhöhung seiner Stabilität seinen Außenrand vorzugsweise in Richtung auf den Gegenflansch umzubördeln.

In der Zeichnung sind Ausführungsbeispiele des erfindungsgemäßen Flanschs dargestellt, anhand deren die Erfindung näher erläutert werden soll.

Fig. 1 zeigt ein Ausführungsbeispiel des erfindungsgemäßen Flanschs im Längsschnitt und

Fig. 2 in Teilansicht

Fig. 3 zeigt ein zweites Ausführungsbeispiel in teilweisem Längsschnitt,

Fig. 4 ein drittes Ausführungsbeispiel ebenfalls in teilweisem Längsschnitt und

Fig. 5 ein viertes Ausführungsbeispiel im Längsschnitt und

Fig. 6 in Draufsicht

Fig. 7 zeigt eine Ausführungsform des Ringformteils des Flanschs.

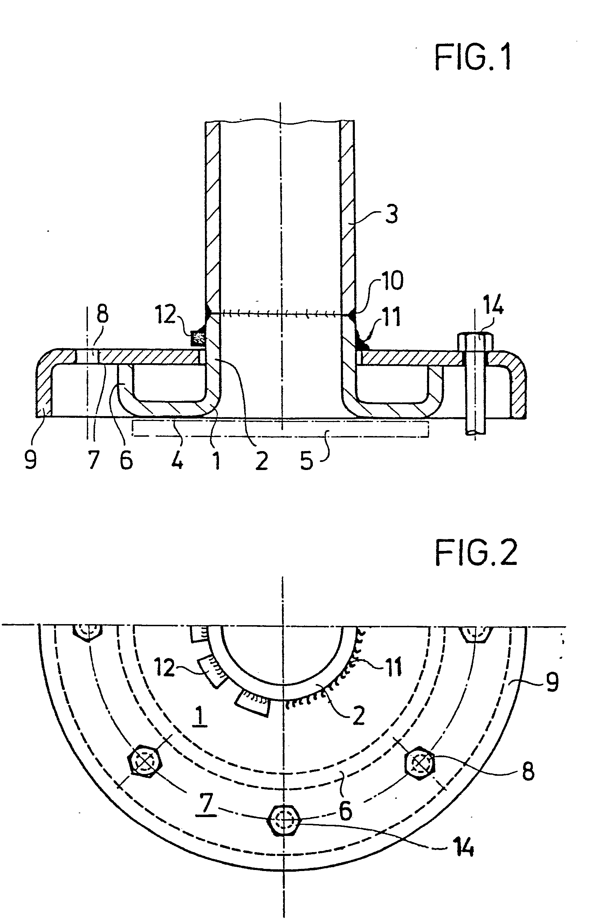

Der erfindungsgemäße Flansch besteht aus einem im Querschnitt U-förmigen Ringformteil 1, der mit seinem rohrförmigen Innenrand 2 an das Ende eines Rohrs 3 oder Rohrstutzens angeschweißt ist. Die Grundfläche 4 des Ringformteils 1 bildet die Dichtfläche, auf die eine Packung 5 aufgelegt wird. Der ringförmige Außenrand 6 des Ringformteils 1 bildet eine Auflage und Unterstützung für den Flanschring 7, der Löcher 8 für den Durchtritt der Befestigungsschrauben 14 aufweist und einen vorzugsweise in Richtung auf die Dichtfläche umgebördelten Außenrand 9 besitzen kann. Der Innenrand 2 des Ringformteils 1 hat zweckmäßigerweise eine längere Axialerstreckung als der Außenrand 6, damit die Schweißnaht lo zwischen Ringformteil 1 und Rohr 3 besser zugänglich ist. Außerdem bietet sich dabei die Möglichkeit, ein zusätzliches Widerlager für den sich auf dem Außenrand 6 abstützenden Flanschring 7 anzubringen. Das Widerlager kann entweder die Form einer Schweißnaht 11 zwischen Flanschring 7 und Innenrand 2 des Ringformteils 1 (rechter Teil der Fig. 1) oder die Form von herausgeprägten und aufgeschweißten Anschlägen 12 (linker Teil der Fig. 1) haben.

Die in Fig. 3 dargestellte Ausführungsform des erfindungsgemäßen Flanschs unterscheidet sich von der in den Fig. 1 und 2 dargestellten nur dadurch, daß das Ringformteil 1 nicht an das Ende des Rohrs 3 angeschweißt, sondern auf dieses aufgeschoben und als Aufsteckschweißflansch mit ihm verschweißt ist. Der Flanschring 7 ist nicht mit dem Ringformteil 1 verschweißt, sondern in Umfangsrichtung frei drehbar in eine Stellung, in der die Schraubenlöcher 8 mit denen im Gegenflansch fluchten.

Eine andere Möglichkeit für die Ausbildung eines Widerlagers für den Flanschring zeigt Fig. 4. Dabei ist der umgebördelte Rand 9 des Flanschrings 7 axial so weit verlängert, daß er bei voll angezogenen Befestigungsschrauben und zusammengedrückter Packung 5 zur Anlage mit dem Gegenflansch 13 kommt. Auch hierbei wird es jedoch bevorzugt, daß Anschläge 12 vorgesehen sind, um eine axiale Bewegung des Flanschrings 7 gegenüber dem Ringformteil 1 zu verhindern.

Um höchstmögliche Stabilität zu erreichen, soll die Abstützung durch den Außenrand 6 des Ringformteils 1 möglichst nahe an den Schraubenlöchern 8, d.h. am Angriffspunkt der Befestigungsschrauben liegen, so daß sich ein möglichst geringer Hebelarm zwischen diesem Angriffspunkt und der Abstützung des Flanschrings 7 durch den Außenrand 6 des Ringformteils 1 ergibt.

Die Figuren 5 und 6 zeigen ein Ausführungsbeispiel des Flanschs, bei dem das Ringformteil 1 einen Außenrand 6 mit einem Durchmesser hat, der gleich dem Durchmesser des Teilkreises für die Schraubenlöcher 8 ist. Im Bereich der Schraubenlöcher 8 ist der Außenrand 6 mit Ausnehmungen versehen (Fig. 6). Bei dieser Form erfolgt die Abstützung des Flanschrings 7 genau an der Stelle, an der die Kräfte beim Anziehen der Befestigungsschrauben 14 auf ihn wirken. Dies durch diese Kräfte auf den Flanschring 7 ausgeübte Biegemoment ist dabei nahezu Null.

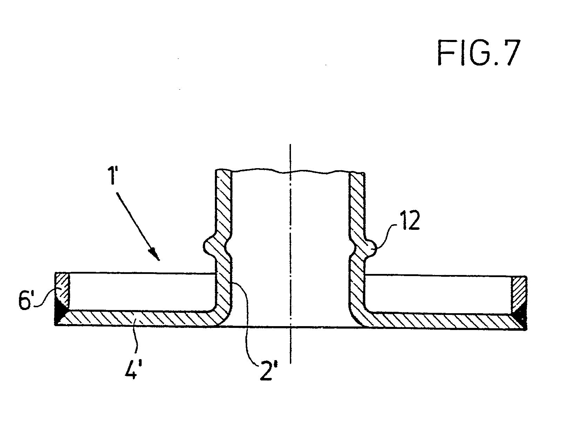

Das Ringformteil kann, wie die Figuren 1 bis 6 zeigen, als Preßformteil einstückig gefertigt sein. Wie das in Fig. 7 dargestellte Beispiel zeigt, ist es grundsätzlich jedoch auch möglich, es aus zwei Teilen, nämlich einem handelsüblichen Bördel 2', 4' und einem an dessen radialem Außenrand angeschweißten Rohrstück 6' herzustellen.

## Patentansprüche

1. Flansch als Verbindungselement für Rohrleitungen, Armaturen oder Behälter, der einen Flanschring (7) mit Löchern für den Durchtritt von Befestigungsschrauben umfaßt und ein mit seiner Grundfläche (4) die Dichtfläche bildendes, im Querschnitt U-förmiges Ringformteil (1), dessen Innenrand (2) eine längere Axialerstreckung hat als sein eine möglichst nahe an dem Teilkreis der Schraubenlöcher (8) in dem Flanschring (7) gelegene Auflage und Unterstützung für den Flanschring (7) bildender Außenrand (6), dadurch gekennzeichnet, daß durch ein am Innenrand (2) des Ringformteils (1) angeordnetes Widerlager für den Flanschring (7) in Form einer Schweißnaht (11) oder eines Anschlags (12) eine unlösbare Verbindung zwischen dem Flanschring (7) und dem Ringformteil (1) gebildet ist.

2. Flansch nach Anspruch 1, dadurch gekennzeichnet, daß der Durchmesser des Außenrandes (6) des Ringformteils (1) gleich dem Teilkreisdurchmesser der Schraubenlöcher (8) in dem Flanschring (7) ist und der Außenrand (6) im Bereich des Durchtritts der Befestigungsschrauben (14) mit Ausnehmungen versehen ist.

3. Flansch nach Anspruch 1, dadurch gekennzeichnet, daß der oder die Anschläge (12) durch Herausprägen aus dem Ringformteil (1), durch Schweißpunkte oder -lagen oder durch angeschweißte Distanzstücke gebildet sind.

4. Flansch nach einem der Ansprüche 1 bis 3, dadurch gekennzeichnet, daß der Flanschring (7) einen umgebördelten Außenrand (9) aufweist.

5. Flansch nach Anspruch 4, dadurch gekennzeichnet, daß der Außenrand (9) des Flanschrings (7) in Richtung auf die Dichtfläche umbördelt ist.

6. Flansch nach einem der Ansprüche 1 bis 5, dadurch gekennzeichnet, daß das Ringformteil (1) aus korrosionsbeständigem und der Flanschring (7) aus geringwertigerem Material, vorzugsweise Kohlenstoffstahl besteht.

## Claims

1. Flange, for use as a connecting element for pipelines, fittings or vessels, this flange comprising a flange-ring (7), with holes for the through-passage of fastening bolts, and an annular, shaped part (1), of U-shaped cross-section, the base surface (4) of this shaped part forming the sealing surface, and its inner margin (2) being longer, in the axial direction, than its outer margin (6), the latter margin forming a bearing surface and support which is positioned as close as possible to the pitch circle of the bolt holes (8) in the flange-ring (7), characterised in that a connection, which cannot be released, is formed between the flange-ring (7) and the annular, shaped part (1), by means of an abutment for the flange-ring (7), this abutment being located on the inner margin (2) of the annular, shaped part (1), and being in the form of a weld seam (11) or a stop (12).

2. Flange according to claim 1, characterised in that the diameter of the outer margin (6) of the annular, shaped part (1) is equal to the diameter of the pitch circle of the bolt holes (8) in the flange-ring (7), and the outer margin (6) is provided with recesses in the region where the fastening bolts (14) pass through.

3. Flange according to Claim 1, characterised in that the stop (12), or stops (12), are formed by raised features, produced by embossing, which project from the annular, shaped part (1), by spots of weld-metal, or layers of weld-metal, or by welded-on spacers.

4. Flange according to one of Claims 1 to 3, characterised in that the outer margin (9) of the flange-ring (7) has been beaded-over.

5. Flange according to Claim 4, characterised in that the outer margin (9) of the flange-ring (7) is beaded-over towards the sealing surface.

6. Flange according to one of Claims 1 to 5, characterised in that the annular, shaped part (1) is composed of a corrosion-resistant material while the flange-ring (7) is composed of a lower-grade material, preferably a carbon steel.

## Revendications

1. Flasque formant élément de liaison pour tuyautéries, ferrures ou récipient, qui comprend autour une bague de flasque (7) avec des trons pour le passage de vis de fixation et une pièce de forme annulaire (1) à section transversale en forme de U et qui forme par sa surface de base (4) la surface d'étanchéité, dont le bord intérieur (2) a une extension axiale supérieure à celle de son bord extérieur (6) qui forme un appui et un renforcement pour la bague de flasque (7) et qui est situé le plus près possible du cercle primitif des trous de vis (8) dans la bague de flasque (7), caractérisé par le fait qu'une butée pour la bague de flasque (7) disposée sur le bord intérieur (2) de la pièce de forme annulaire (1) et formée par une soudure (11) ou un arrêt (12) forme une liaison indétachable entre la bague de flasque (7) et la pièce de forme annulaire (1).

2. Flasque selon la revendication 1, caractérisé par le fait que le diamètre du bord extérieur (6) de la pièce de forme annulaire (1) est égal au diamètre du cercle primitif des trous de vis (8) dans la bague de flasque (7) et le bord extérieur (6) est muni d'évidements dans la zone de traversée des vis de fixation (14).

3. Flasque selon la revendication 1, caractérisé par le fait que le ou les arrêts (12) sont formés par estampage de la pièce de forme annulaire (1), par des points ou des passes de soudure, ou bien par des pièces d'écartement soudées.

4. Flasque selon l'une des revendications 1 à 3, caractérisé par le fait que la bague de flasque (7) présente un bord extérieur (9) rabattu.

**0 025 070**

5. Flasque selon la revendication 4, caractérisé par le fait que le bord extérieur (9) de la bague de flasque (7) est rabattu en direction de la surface d'étanchéité.

6. Flasque selon l'une des revendications 1 à 5, caractérisé par le fait que la pièce de forme (1) est constituée en un matériau résistant à la corrosion et la bague de flasque (7) en un matériau inférieur, de préférence en acier au carbone.

FIG.1

FIG.2

FIG.3

FIG.4

FIG.5

FIG.6

FIG.7